# FASCICULE DE BREVET EUROPEEN

(11) **EP 3 164 299 B1**
(45) Date de publication et mention de la délivrance du brevet: **31.07.2019**
(21) Numéro de dépôt: 15736561.0
(22) Date de dépôt: 22.06.2015
(51) Int. Cl.: B60R 16/02, B60R 22/26, F16L 3/01, H02G 3/04, B60R 22/18, B60N 2/02

(54) **PROCÉDÉ ET BAGUE DE MONTAGE D'UN CÂBLE DE DÉTECTION DE NON-BOUCLAGE DE CEINTURE DE SÉCURITÉ**
VERFAHREN UND RING ZUR BEFESTIGUNG EINES KABELS ZUR ERKENNUNG EINES NICHT ANGELEGTEN SICHERHEITSGURTS
METHOD AND MOUNTING RING FOR A CABLE FOR DETECTING AN UNBUCKLED SAFETY BELT

(30) Priorité: 02.07.2014 FR 1456319
(43) Date de publication de la demande: 10.05.2017
(73) Titulaire: PSA Automobiles SA, 78300 Poissy (FR)
(72) Inventeur: OUDART, Fabrice, F-25700 Valentigney (FR); SAUVAGE, Sebastien, F-25200 Grand Charmont (FR)
(86) Numéro de dépôt international: PCT/FR2015/051652
(87) Numéro de publication internationale: WO 2016/001514

(56) Documents cités:
- EP-A2- 2 740 962
- US-A1- 2010 287 728
- US-A1- 2012 097 806
- US-A1- 2014 054 064
- US-B1- 6 218 625
- US-B1- 6 402 240

## Description

### DOMAINE TECHNIQUE

L'invention se rapporte à un procédé de montage d'un conduit ou faisceau électrique dit câble CNB (acronyme de « Câble de Non-Bouclage ») destiné à détecter et avertir d'un non-bouclage d'une ceinture de sécurité équipant un siège de véhicule automobile.

L'invention appartient au domaine de la protection de fils électriques dans un environnement potentiellement hostile et, plus particulièrement mais pas exclusivement, aux câbles CNB des ceintures de sécurité de véhicules automobiles.

Ces câbles CNB équipent les moyens de retenue - dénommés « brin boucles » - équipant les assises des véhicules. Ces brins boucles sont fixés à une armature de chaque siège par un support approprié et comportent un logement pour intégrer et verrouiller les extrémités des ceintures de sécurité en position active.

Les brins boucles sont, en général, équipés d'un circuit de non-détection de bouclage de ceinture de sécurité. Ce circuit est apte à déclencher - via le câble CNB - une alerte visuelle au tableau de bord et, éventuellement, une alerte sonore.

L'alerte est déclenchée par un signal émis par le circuit de non-détection lorsqu'au moins un siège du véhicule est occupé après enclenchement du contact moteur. L'occupation des sièges est identifiée par un capteur, par exemple un capteur piézo-électrique ou équivalent, en liaison avec la pression exercée sur l'assise du fait de l'occupation du siège. Ce signal est transmis au tableau de bord tant que l'extrémité de la ceinture de sécurité du (ou des) siège(s) occupé(s) n'est pas verrouillée dans le brin boucle du siège. Dès que le verrouillage de cette extrémité est opéré, le circuit de détection est coupé, ce qui coupe également le signal et stoppe l'alerte.

### ÉTAT DE LA TECHNIQUE

On connait du document de brevet US 2012/0097806, une pièce de fixation d'un câble électrique de brin boucle de siège de véhicule sur une armature de ce siège. La pièce de fixation est clipsée à l'armature et comporte un manchon déformable à charnière pour y intégrer une portion du câble électrique.

Des contacts ou frottements entre le câble électrique et la paroi de l'armature peuvent se produire du fait des boucles « dynamiques » formés par le câble et des vibrations dans l'habitacle ou des déplacements répétés dus aux variations de la réhaussse de siège. De tels contacts ou frottements attaquent la gaine du câble et la pièce de fixation est destinée à éviter tout contact ou frottement.

Cependant, la solution préconisée par ce document n'est pas applicable dans le cas où le câble électrique est amené à traverser l'armature. Dans ce cas-là, le document de brevet JP 2002 127799 prévoit de réaliser des encoches parallèles en forme de « L » dans l'armature latérale de l'assise afin de passer un câblage électrique entre une paroi externe et une paroi interne de cette armature.

Or il apparaît qu'une telle réalisation à encoches favorise les frottements entre le câble et le tranchant des encoches, ce qui conduit avec le temps à entamer la gaine du câble et au risque d'endommager le câble et de provoquer des dégâts importants. Le document EP2740962 montre une bague de montage comportant un pourtour pourvu d'une ouverture pour qu'un câble puisse le traverser et une zone centrale de logement du câble avec un accès.

### EXPOSÉ DE L'INVENTION

L'invention a pour objectif principal d'éviter le contact répété entre le câble de non-bouclage ou CNB et l'armature d'assise de siège de véhicule lorsque ce câble passe à travers cette armature. Pour ce faire, l'invention prévoit de maintenir le câble CNB hors des bords de l'armature lorsque ledit câble traverse ladite armature.

A cet effet, la présente invention a plus précisément pour objet un procédé de montage d'un conduit ou faisceau électrique dit câble CNB, destiné à détecter et avertir du non-bouclage d'une ceinture de sécurité équipant un siège de véhicule automobile, selon la revendication 1.

### PRÉSENTATION DES FIGURES

D'autres données, caractéristiques et avantages de la présente invention apparaîtront à la lecture de la description détaillée non limitative qui suit, en référence aux figures annexées qui représentent, respectivement :
- la figure 1, une vue latérale partielle d'un flasque d'armature d'assise de siège d'un véhicule avant la mise en place du câble CNB, avec le brin boucle et le câble CNB muni d'un connecteur de couplage au faisceau habitacle du véhicule,;
- les figures 2a et 2b, des vues en perspective partielles avant et après le passage du connecteur dans la découpe du flasque d'armature;
- la figure 3, une vue supérieure de l'armature de l'assise de siège permettant de suivre le trajet du câble CNB jusqu'au boîtier électrique de l'assise ;
- la figure 4, une vue latérale partielle du siège de véhicule, équipé d'une armature d'assise munie de son flasque latéral, du brin boucle et du câble CNB après le passage du connecteur dans la découpe du flasque d'armature;
- la figure 5, une vue en perspective d'un exemple de bague de montage du câble CNB selon l'invention dans laquelle est intégrée le câble CNB, et
- les figures 6a et 6b, des vues supérieure et latérale partielles du montage du câble CNB après clipsage de cette bague dans la découpe du flasque d'armature.

### DESCRIPTION DÉTAILLÉE

Sur les figures, des signes de référence identiques renvoient aux mêmes éléments exerçant les mêmes fonctions, ainsi qu'aux paragraphes qui les décrivent.

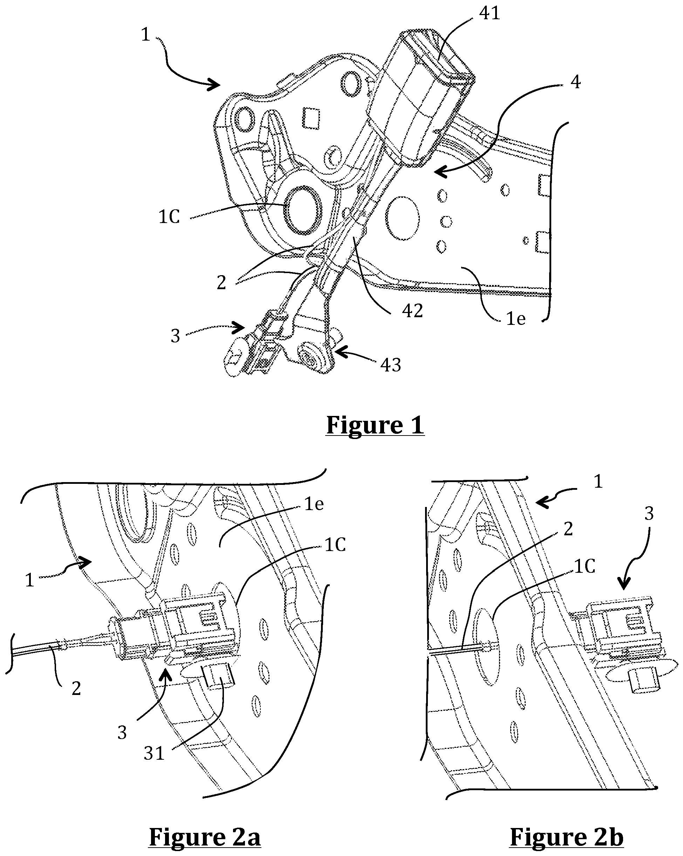

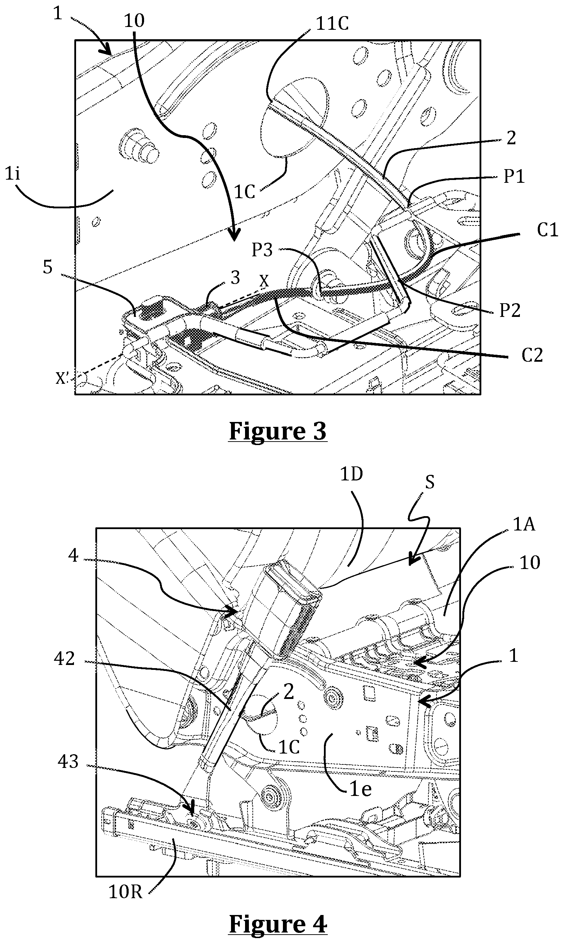

En référence à la vue latérale de la figure 1, la face externe 1e d'un flasque 1 d'armature de siège de véhicule (cf. figure 3) est illustrée. L'une des découpes, la découpe circulaire 1C, réalisées dans ce flasque 1 est destinée à la traversée d'un câble CNB 2. Le câble CNB 2 présente en une première extrémité un connecteur 3 et est relié, en son autre extrémité, au logement 41 d'un brin boucle 4, ce logement 41 étant apte à recevoir l'extrémité de bouclage de la ceinture de sécurité (non représentée). Le brin boucle 4 est monté sur un support 42 destiné à être fixé à un rail de l'armature du siège (cf. figure 4) via un boulon 43.

L'installation du câble CNB 2 débute par le passage du connecteur 3 à travers la découpe circulaire 1C du flasque d'armature 1, comme illustré par les vues en perspective d'avant et d'après traversée des figures 2a et 2b. Avant la traversée, le connecteur 3 est amené en face de la découpe 1C (figure 2a) du côté de la face externe 1e du flasque 1, et le contacteur 31 du connecteur 3 est poussé afin de rendre son encombrement inférieur à l'ouverture formée par la découpe circulaire 1C. Le connecteur 3 est alors passé à travers cette découpe 1C, ainsi que le câble CNB 2 solidaire du connecteur 3 (figure 2b).

La vue supérieure de l'armature d'assise de siège 10 de la figure 3 permet de suivre le trajet du câble CNB 2 à l'intérieur de l'armature 10. La face intérieure 1i du flasque 1 apparaît alors sur cette figure 3. Après avoir franchi la découpe 1C, le câble CNB 2 est passé par plusieurs points d'ancrage P1, P2, P3, afin de sécuriser son trajet et permettre un couplage optimal du connecteur 3 au faisceau habitacle du véhicule via un boîtier 5. Dans une portion finale 2F, le câble CNB 2 est ainsi sensiblement positionné selon l'axe X'X du boîtier 5 auquel est couplé le connecteur 3.

Les courbures C1 et C2, imposées au trajet du câble CNB 2 dans l'armature 10, conduisent le câble CNB 2 à rester en contact avec la découpe circulaire 1C formée dans le flasque 1. Les vibrations et les variations de la réhausse de l'armature 10 risquent alors de « scier » le câble CNB 2 sur une portion de contact 11C de la découpe 1C.

Du côté de la face externe 1e du flasque 1, le brin boucle 4 a été fixé à un rail 10R de l'armature 10 via son support 42 et le boulon 43, comme illustré par la vue en perspective latérale partielle du siège « S » de la figure 4. Cette figure montre partiellement le siège « S » formé d'un dossier 1D et d'une assise 1A dont seule l'armature 10 apparaît sans son revêtement. Afin d'empêcher le câble CNB 2 de frotter contre le tranchant de la découpe 1C du flasque 1, l'invention prévoit alors d'ajuster une bague de montage dans la découpe 1C pour protéger le câble CNB 2.

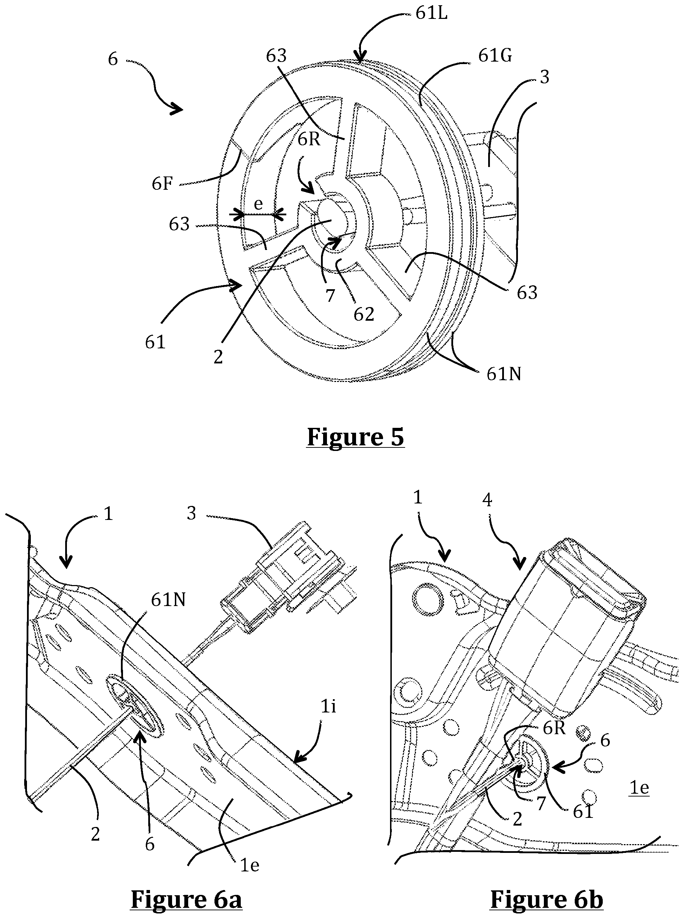

Une telle bague de montage 6 est illustrée par la vue en perspective de la figure 5. La bague de montage 6 est en matériau thermoplastique et est issue de moulage. Un tel matériau est moins résistant que le métal du tranchant du flasque et, même si le câble CNB peut entrer en contact avec une portion de la bague, l'endommagement du câble CNB qui en résulte reste négligeable.

Du fait de la configuration circulaire de la découpe 1C du flasque 1 (cf. figures précédentes), la bague de montage 6 présente un pourtour 61 de forme annulaire, complémentaire en dimension de la découpe 1C. Le pourtour 61 est pourvu sur sa face latérale circulaire 61L d'une gorge 61G, de diamètre sensiblement égal à celui de la découpe 1C, entourée de deux nervures 61N de diamètre légèrement supérieur à celui de la découpe 1C. La largeur de la gorge 61G étant sensiblement égale à l'épaisseur de la découpe 1C, les nervures 61N permettront un clipsage de la bague 6 dans la découpe 1C, comme cela sera décrit plus loin.

De plus le pourtour 61 comporte une fente biseautée 6F qui permet d'intégrer le câble CNB 2 dans l'espace intérieur de la bague 6, espace limité par le pourtour 61. Une zone de logement central 7 pour le câble CNB 2 est définie par un une paroi circulaire interne 62. La paroi circulaire 62 est ouverte par un regard 6R de dimension suffisante pour que le câble CNB 2 puisse traverser ladite paroi 62. Des branches radiales 63 relient le pourtour annulaire 61 à la paroi circulaire 62. Le pourtour 61, la paroi circulaire 62 et les branches radiales 63 ont une même épaisseur « e », définie par la largeur de la face latérale circulaire 61L du pourtour 61.

Sur la figure 5, le câble CNB 2 - qui apparaît dans le logement central 7 - est présenté en section afin de ne pas masquer une partie de la bague de montage 6. A l'extrémité du câble CNB 2 se trouve le connecteur 3. Lors du montage, le câble CNB 2 est intégré dans la bague de montage 6 par clipsage à travers la fente biseautée 6F du pourtour 61. Le matériau thermoplastique constituant le pourtour 61 est suffisamment élastique pour revenir à sa position de base de forme annulaire. Puis le câble CNB 2 est positionné dans le logement central 7 après avoir traversé le regard 6R formé dans la paroi circulaire 62.

Dans l'exemple de montage, le positionnement du câble CNB 2 dans le logement central 7 est effectué avant que le connecteur 3 soit couplé au boîtier 5 (cf. figure 3), mais ce positionnement peut, alternativement, être effectué après que ce couplage ait été réalisé.

La bague de montage 6 est ensuite ajustée par clipsage dans la découpe 1C du flasque 1, comme il apparaît sur les vues supérieure et latérale partielles des figures 6a et 6b.

Après clipsage, les nervures 61N de la bague de montage 6 viennent en appui sur les faces 1e et 1i du flasque 1, de sorte que la bague de montage 6 peut éventuellement être mise en rotation en appui sur la découpe 1C (cf. figures 1 à 4). Cela permet de positionner le regard 6R de façon que la courbure du câble CNB 2 du brin boucle 4 soit orientée, après couplage du connecteur 3, de manière diamétralement opposée au regard 6R. Dans ces conditions, le câble CNB 2 ne sort pas du logement central 7.

L'invention n'est pas limitée aux exemples de réalisation décrits et représentés. Ainsi, la bague de montage peut présenter d'autres moyens d'ajustement dans la découpe du flasque (par roulement, par rainurage dans la tranche de la découpe ou par des moyens de solidarisation, par exemple par collage).

Par ailleurs, d'autres moyens de clipsage peuvent être utilisés pour introduire le câble CNB dans la bague de montage: une languette dans une ouverture pratiquée dans le pourtour de la bague, un crochet ou équivalent. De même, le regard d'entrée de la paroi circulaire définissant le logement central de la bague peut être remplacé par l'un des moyens de clipsage évoqués ci-dessus, ce qui rend la paroi circulaire bloquante en empêchant le câble CNB de sortir de son logement central.

En outre, les configurations de découpe du flasque et de la face latérale du pourtour de la bague peuvent avoir des formes géométriques adaptées autres que circulaire, par exemple rectangulaire, ovoïde ou équivalent.

## Revendications

1. Procédé de montage d'un conduit ou faisceau électrique dit câble CNB (2), destiné à détecter et avertir du non-bouclage d'une ceinture de sécurité équipant un siège de véhicule automobile (S), le câble CNB (2) étant relié au faisceau électrique habitacle du véhicule par un connecteur (3), après avoir traversé un flasque (1) d'armature métallique (10) d'assise (1A) du siège (S), comportant une étape préliminaire de moulage d'une bague de montage (6) constituée dans un matériau moins résistant que le métal du flasque (1), ladite bague (6) présentant un pourtour ouvert (61) complémentaire d'une découpe (1C) réalisée dans le flasque d'armature (1), une étape d'intégration du câble CNB (2) dans la bague de montage (6) après avoir traversé le pourtour ouvert (61) de cette bague (6), une étape de passage du connecteur (3) à travers la découpe (1C) du flasque (1), une étape d'ajustage du pourtour (61) de ladite bague (6) dans cette découpe (1C), la bague de montage (6) étant dans un matériau suffisamment élastique pour que le pourtour (61) puisse revenir dans sa position initiale après que le câble CNB (2) l'ait traversé, et une étape consistant à loger le câble CNB (2) dans une zone centrale (7) de la bague de montage, le câble CNB (2) étant intégré dans cette zone centrale (7) via un accès (6R) ; la zone centrale (7) étant bloquante afin d'empêcher le câble CNB (2) de ressortir de cette zone centrale (7).

## Patentansprüche

1. Verfahren zur Befestigung einer elektrischen Leitung oder elektrischen Bündels, als CNB-Kabel (2) bezeichnet, das vorgesehen ist, um einen nicht angelegten Sicherheitsgurt, der einen Kraftfahrzeugsitz (S) ausstattet, zu erkennen und zu melden, wobei das CNB-Kabel (2) mit der elektrischen Fahrgastraumleitung des Fahrzeugs über ein Verbindungsstück (3) verbunden ist, nachdem es einen Flansch (1) eines metallenen Gestells (10) einer Sitzfläche (1A) des Sitzes (S) durchquert hat, umfassend einen vorbereitenden Schritt des Gießens eines Befestigungsrings (6), der aus einem weniger widerstandsfähigen Material besteht als das Metall des Flansches (1), wobei der Ring (6) eine offene Umrandung (61) aufweist, die komplementär zu einem Schnitt (1C) ist, der im Flansch des Gestells (1) realisiert ist, einen Schritt des Integrierens des CNB-Kabels (2) im Befestigungsring (6), nachdem es die offene Umrandung (61) dieses Rings (6) durchquert hat, einen Schritt des Durchgangs des Verbindungsstücks (3) durch den Schnitt (1C) des Flansches (1), einen Schritt des Einpassens der Umrandung (61) des Rings (6) in diesen Schnitt (1C), wobei der Befestigungsring (6) aus einem Material besteht, das elastisch genug ist, um es der Umrandung (61) zu ermöglichen, in ihre Anfangsposition zurückzukehren, nachdem das CNB-Kabel (2) sie durchquert hat, und einen Schritt, der darin besteht, das CNB-Kabel (2) in einem mittleren Bereich (7) des Befestigungsrings aufzunehmen, wobei das CNB-Kabel (2) in diesem mittleren Bereich (7) über einen Zugang (6R) integriert ist; wobei der mittlere Bereich (7) verschließend ist, um das CNB-Kabel (2) daran zu hindern, aus diesem mittleren Bereich (7) herauszuragen.

## Claims

1. Method for mounting a duct or electrical harness referred to as CNB cable (2), intended to detect and warn of the non-buckling of a seat belt provided on a seat of a motor vehicle (S), the CNB cable (2) being connected to the passenger compartment electrical harness of the vehicle by a connector (3), after having passed through a flange (1) with a metal frame (10) of the seat portion (1A) of the seat (S), comprising a preliminary step of moulding an assembly ring (6) formed in a material that is not as resistant as the metal of the flange (1), said ring (6) having an open perimeter (61) that is complementary with a cut-out (1C) made in the flange of the frame (1), a step of integrating the CNB cable (2) into the assembly ring (6) after having passed through the open perimeter (61) of this ring (6), a step of passing the connector (3) through the cut-out (1C) of the flange (1), a step of adjusting the perimeter (61) of said ring (6) in this cut-out (1C), the assembly ring (6) being made of a material that is sufficiently elastic so that the perimeter (61) can return to its initial position after the CNB cable (2) has passed through it, and a step consisting in housing the CNB cable (2) in a central zone (7) of the assembly ring, with the CNB cable (2) being integrated into this central zone (7) via an access (6R); the central (7) being blocking in order to prevent the CNB cable (2) from combing back out of this central zone (7).
